# EUROPÄISCHE PATENTANMELDUNG

(11) **EP 3 792 712 A1**
(43) Veröffentlichungstag der Anmeldung: **17.03.2021**
(21) Anmeldenummer: 19197125.8
(22) Anmeldetag: 12.09.2019
(51) Int. Cl.: G05B 19/404, G05B 19/418

(54) **VERFAHREN ZUR KORREKTUR VON WERKZEUGPARAMETERN EINER WERKZEUGMASCHINE ZUR BEARBEITUNG VON WERKSTÜCKEN**

(71) Anmelder: Hexagon Technology Center GmbH, 9435 Heerbrugg (CH)
(72) Erfinder: Steinkopf, Malte, 67227 Frankenthal (DE)
(74) Vertreter: Knefel, Cordula

(57) **Zusammenfassung**

Die Erfindung betrifft ein Verfahren zur Korrektur von Werkzeugparametern einer Werkzeugmaschine zur Bearbeitung von Werkstücken,
- bei dem Messdaten von Messmerkmalen als Ist-Werte wenigstens eines mit der Werkzeugmaschine bearbeiteten Werkstückes erfasst werden,
- bei dem die Messdaten mit vorgegebenen Soll-Werten des Werkstückes verglichen werden,
- bei dem Messdaten von wenigstens zwei Messmerkmalen von wenigstens zwei Parametern wenigstens eines Messmerkmales und/oder von wenigstens einem Messmerkmal und von wenigstens einem Parameter erfasst werden,
- bei dem aus diesen Messdaten und den zugehörigen Soll-Werten ein Mittelwert für einen Werkzeugkorrekturwert berechnet wird, mit dem eine Korrektur der Werkzeugmaschine durchgeführt wird.

## Beschreibung

Die Erfindung betrifft ein Verfahren zur Korrektur von Werkzeugparametern einer Werkzeugmaschine zur Bearbeitung von Werkstücken.

Grundsätzlich betrifft die vorliegende Erfindung das Gebiet der Qualitätssicherung für Produktionsprozesse. Insbesondere betrifft die vorliegende Erfindung ein Verfahren zum Steuern einer Produktionsanlage auf der Grundlage von Messungen von hergestellten Werkstücken des Produktionsprozesses, wobei das Werkstück durch Nenndaten definiert ist, die beispielsweise durch eine technische Zeichnung und/oder ein CAD-Modell bereitgestellt werden, um systematische Fehler im Produktionsprozess zu kompensieren.

Bei der industriellen Herstellung von Gütern, wie zum Beispiel Autos ist es üblich, Messmerkmale und Parameter der verschiedenen Komponenten zu messen. Diese Messungen können in speziellen Messzellen mit berührenden oder berührungslosen Messgeräten beispielsweise durch Messroboter durchgeführt werden, wie aus der DE 195 44 240 A1 bekannt.

Der Zweck solcher Methoden ist es, mögliche Fehler des Messobjektes während der Produktentwicklung, Produkteinführung oder während der Produktion zu bestimmen. Nachteil hierbei ist, dass beim Messvorgang verschiedene zusätzliche Fehler auftreten können, die die Ermittlung der Fehler des Objektes verhindern oder erschweren. Die in einem kontrollierten Produktionsprozess produzierten Mengen können in einem Bereich zwischen einteiliger Produktion und Massenproduktion liegen. Die Teile werden in einer Produktionsanlage hergestellt, in der unterschiedliche Fertigungstechniken und Technologien integriert werden können. Abhängig von der spezifischen Fertigungstechnik kann der Installationsaufbau der Anlage variieren. Beispielsweise kann die Produktionsanlage eine CNC-Maschine - einschließlich Programmiermittel, sowie elektronischer Steuermittel - umfassen, wenn die Teile durch Fräsen oder Drehen hergestellt werden.

Die herzustellenden Werkstücke werden durch Nenndaten in einer Zeichnung und/oder einem CAD-Modell spezifiziert, die die theoretischen Abmessungen des Werkstückes in Kombination mit geeigneten Toleranzen definieren. Die Toleranzen definieren die akzeptierten Abweichungen zwischen den angegebenen theoretischen Abmessungen der Nenndaten und den tatsächlichen Abmessungen eines hergestellten Werkstückes.

Die Herstellungsprozesse umfassen auch einen Qualitätskontrollschritt, bei dem Maßnahmen ergriffen werden, um die gewünschte Qualität der hergestellten Werkstücke sicherzustellen, das heißt um sicherzustellen, dass der Prozentsatz von "guten" Teilen ein definiertes Minimum nicht unterschreitet. Der Qualitätskontrollschritt besteht aus zwei Teilschritten:
- einem Messchritt zum Erfassen der Qualität produzierten Teile durch Messen geeigneter Messmerkmale und Parameter mit einer geeigneten Messeinrichtung;
   und einem
- Korrekturschritt um die Produktionsqualität zu verbessern, falls die Ergebnisse des Messchritts unbefriedigende Zahlen zeigen.

Heutzutage kann bei Herstellungsverfahren der oben beschriebenen Art die Messeinrichtung, die die Qualität der hergestellten Werkstücke erfasst, beispielsweise ein Koordinatenmessgerät oder ein Gelenkarmessgerät zum Beispiel ein Messroboterarm sein.

Wenn die Messungen ergeben, dass die Abweichungen zwischen den gemessenen Teileabmessungen und den in den Nenndaten definierten theoretischen Werten die akzeptierten Toleranzen überschreiten, werden geeignete Parameterwerte der Produktionsanlage geändert, um diese Produktionsfehler zu kompensieren. Zum Beispiel könnte bei einer CNC-Maschine dies der Fall sein, wenn ein Fräswerkzeug durch Verschleiß seine Eigenschaften ändert.

Diese Parameterwertänderung wird, wie aus der Praxis bekannt, von erfahrenen Operateuren von Hand durchgeführt. Dies hat den Nachteil, dass ausschließlich Operateure mit sehr guten Kenntnissen über den allgemeinen Installationsaufbau der Anlage, den aktuellen Aufbau der Anlage und über die Ursache der Produktionsfehler die Parameterwertänderung vornehmen können.

Dies erfordert hochqualifiziertes Personal und darüber hinaus muss in vielen Fällen ein zeitaufwändiger und kostspieliger Try-and-Error-Ansatz durchgeführt werden, da die Ursache von Produktionsfehlern häufig nicht genau bekannt sind.

Zum Stand der Technik (US 2016/202681 A) wird aus diesem Grunde vorgeschlagen, um die beschriebenen Nachteile zu vermeiden, ein Verfahren zum Steuern eines Produktionsprozesses eines Objekts in einer Produktionsbaugruppe und zum Kompensieren von Fehlern, die im Produktionsprozess auftreten, zu verwenden, wobei das Verfahren das Erzeugen tatsächlicher Eigenschaftsdaten umfasst. Hierbei ist ein nach dem Fertigungsmodell hergestelltes Musterobjekt vorhanden. Gemäß diesem Stand der Technik wird, wenn Fehler detektiert werden, ein angepasstes Produktionsmodell erzeugt.

Das der Erfindung zugrunde liegende technische Problem besteht darin, ein Verfahren zur Korrektur von Werkzeugparametern einer Werkzeugmaschine zur Bearbeitung von Werkstücken anzugeben, mit dem Werkstücke herstellbar sind, die innerhalb der vorgegebenen Toleranzgrenzen oder anderer vorgebebener Grenzwerte automatisiert hergestellt werden, ohne dass hochqualifiziertes Personal erforderlich ist.

Dieses technische Problem wird durch ein Verfahren mit den Merkmalen gemäß Anspruch 1 gelöst.

Das erfindungsgemäße Verfahren zur Korrektur von Werkzeugparametern einer Werkzeugmaschine zur Bearbeitung von Werkstücken
- bei dem Messdaten als Ist-Werte wenigstens eines mit der Werkzeugmaschine bearbeiteten Werkstückes erfasst werden,
- bei dem die Messdaten mit vorgegebenen Soll-Werten des Werkstückes verglichen werden,
zeichnet sich dadurch aus,
- dass Messdaten von wenigstens zwei Messmerkmalen und/oder
- Messdaten von wenigstens zwei Parametern wenigstens eines Messmerkmales und/oder
- Messdaten von wenigstens einem Messmerkmal und von wenigstens einem Parameter desselben oder eines anderen Messmerkmales erfasst werden,
- dass aus diesen Messdaten und den zugehörigen Soll-Werten ein Mittelwert für einen Werkzeugkorrekturwert berechnet wird,
- und dass mit dem Werkzeugkorrekturwert eine Korrektur der Werkzeugmaschine durchgeführt wird.

Das erfindungsgemäße Verfahren weist den Vorteil auf, dass zum einen die Werkzeugmaschine vollautomatisch einer Werkzeugkorrektur unterzogen werden kann, ohne dass hochqualifiziertes Personal erforderlich ist. Andererseits weist das Verfahren den Vorteil auf, dass die Messdaten von wenigstens zwei Messmerkmalen und/oder die Messdaten von wenigstens zwei Parametern eines Messmerkmales und/oder die Messdaten von wenigstens einem Messmerkmal und von wenigstens einem Parameter desselben oder eines anderen Messmerkmales erfasst werden, und dass diese Messdaten mit den zugehörigen Soll-Werten verglichen werden und ein Mittelwert für den Werkzeugkorrekturwert berechnet wird. Das bedeutet, dass nicht ein Werkzeugkorrekturwert für ein einzelnes Messmerkmal oder einen einzelnen Parameter ermittelt wird, was zur Folge hätte, dass die Werkzeugkorrektur unter Umständen ein anderes Messmerkmal oder einen anderen Parameter überkorrigiert.

Unter "Messmerkmal eines Werkstückes" wird gemäß der Erfindung ein zu messendes Messmerkmal des Werkstückes, beispielsweise eine Nut, eine Tasche, eine Bohrung, ein Zapfen oder dergleichen verstanden.

Unter "Parametern" werden gemäß der Erfindung Prozessparameter wie beispielsweise die Temperatur verstanden.

Unter Parametern können aber auch gemäß der Erfindung Maschinenparameter verstanden werden, wie beispielsweise Spindeldrehzahl, Anpressdruck eines Werkzeuges oder dergleichen.

Gemäß einer besonders bevorzugten Ausführungsform der Erfindung ist vorgesehen, dass aus den Messdaten von wenigstens zwei Messmerkmalen und/oder aus den Messdaten von wenigstens zwei Parametern wenigstens eines Messmerkmales desselben oder eines anderen Messmerkmales und/oder aus den Messdaten von wenigstens einem Messmerkmal und wenigstens einem Parameter ein gewichteter Mittelwert für den Werkzeugkorrekturwert berechnet wird.

Diese besondere Ausführungsform weist den Vorteil auf, dass die Messmerkmale und/oder Parameter gewichtet werden können. Das bedeutet, dass empfindliche Messmerkmale oder Parameter stärker in die Werkzeugkorrektur eingehen, als Messmerkmale oder Parameter, die hinsichtlich ihrer Toleranzen oder Abweichungen nicht so kritisch sind.

Das bedeutet, dass durch die Betrachtung verschiedener Messmerkmale oder Parameter automatisiert ein Werkzeugkorrekturwert berechnet werden kann, der eine Korrektur der Werkzeugmaschine ermöglicht, so dass sämtliche Merkmale und Parameter in den Toleranzgrenzen oder vorgegebenen Grenzwerten korrigiert werden, ohne dass einzelne Messmerkmale und/oder Parameter überkorrigiert werden.

Gemäß einer weiteren vorteilhaften Ausführungsform der Erfindung ist vorgesehen, dass das Messmerkmal und/oder der Parameter mit der kleinsten Toleranz am stärksten in die Wichtung eingeht.

Durch diese Ausführungsform wird gewährleistet, dass eine optimale Korrektur der Messmerkmale und/oder Parameter durchgeführt wird, nämlich, dass die "empfindlichsten" Messmerkmale und/oder Parameter optimal, das heißt im Idealfall nahe des Nominalwertes korrigiert werden, während weniger empfindliche Merkmale und/oder Parameter so korrigiert werden, dass die Korrektur in den vorgegebenen Grenzwerten oder Toleranzbereichen liegt.

Gemäß einer weiteren vorteilhaften Ausführungsform der Erfindung ist vorgesehen, dass eine Zuordnung jedes Messmerkmales zu wenigstens einem Bearbeitungswerkzeug erfolgt.

Jedes Messmerkmal wird durch ein Bearbeitungswerkzeug bearbeitet. Beispielsweise wird eine Bohrung mittels eines Bohrers erzeugt, oder ein Zapfen wird mittels eines Fräsers aus Vollmaterial gefräst. Ein Messmerkmal, wie eine Bohrung, kann auch durch mehrere Bearbeitungswerkzeuge hergestellt werden. So kann zum Beispiel eine Bohrung durch den Einsatz eines Bohrers und dem anschließenden Einsatz eines Fräswerkzeuges hergestellt werden. Diese Bearbeitungswerkzeuge werden dem Messmerkmal zugeordnet. Hierdurch ist es möglich, bei einem Abweichen des Messwerkzeuges von den Nominalwerten, einen Rückschluss auf zum Beispiel einen Verschleiß des oder der Bearbeitungswerkzeuge zu ziehen.

Gemäß einer weiteren vorteilhaften Ausführungsform der Erfindung ist vorgesehen, dass der Werkzeugkorrekturwert gleitend aus den letzten n Messungen berechnet (mit *n* > 1) berechnet wird.

Beispielweise kann der Werkzeugkorrekturwert aus den letzten fünf, zehn oder zwanzig Messungen (n=5, n-10, n=20) berechnet werden. Diese Ausführungsform des erfindungsgemäßen Verfahrens weist den Vorteil auf, dass eine Korrektur des Werkzeuges nicht aufgrund eines einmaligen Ausreißers durchgeführt wird, sondern es wird mit dem erfindungsgemäßen Verfahren eine kontinuierliche Drift erfasst. Diese Drift wird durch den Werkzeugkorrekturwert in dem Werkzeug korrigiert.

Gemäß einer weiteren vorteilhaften Ausführungsform der wird die Drift erst korrigiert, wenn die gemessenen Messdaten eine Abweichung eines vorgegebenen Grenzwertes aufweisen. Die Korrektur kann auch durchgeführt werden, wenn die gemessenen Messdaten eine Abweichung in der Größe des Toleranzwertes aufweisen.

Eine weitere vorteilhafte Ausführungsform der Erfindung sieht vor, dass der Werkzeugkorrekturwert visualisiert wird. Hierdurch ist es einem Operateur möglich, den Werkzeugkorrekturwert anzuschauen und je nach Wunsch zu überwachen.

Vorteilhaft ist weiterhin vorgesehen, dass die Korrektur der Werkzeugmaschine nach Ermittlung eines Werkzeugkorrekturwertes vollautomatisch oder nach einer Bestätigung oder nach einer Bestätigung nach Visualisierung des Werkzeugkorrekturwertes durchgeführt wird.

Das erfindungsgemäße Verfahren kann zum Beispiel voll automatisch durchgeführt werden. Es werden die Werkzeugkorrekturwerte nach den Vorgaben, beispielsweise Mittelwertbildung oder gewichteter Mittelwertbildung errechnet und automatisch die Werkzeugmaschine mit dem Werkzeugkorrekturwerten korrigiert.

Es ist jedoch auch möglich, das der Werkzeugkorrekturwert beispielsweise angezeigt wird und erst nach einer Bestätigung durch einen Operateur der Werkzeugkorrekturwert zur Korrektur der Werkzeugmaschine verwendet wird.

Eine weitere vorteilhafte Ausführungsform der Erfindung sieht vor, dass eine Werkzeugkorrektur durchgeführt wird, nachdem aufgrund der letzten n Messungen eine kontinuierliche Drift eines Messmerkmales und/oder eines Parameters erfasst wurde und die Messdaten einen vorgegebenen Grenzwert oder einen vorgegebenen Toleranzwert überschreitet. Durch dieses Verfahren wird gewährleistet, dass nicht einmalige Produktions- oder Messfehler zu einer Werkzeugmaschinenkorrektur führen, sondern dass erst bei einer kontinuierlichen Drift, beispielsweise wenn ein Fräswerkzeug sich im Laufe der Zeit abnutzt, so dass keine Bohrungen oder Zapfen innerhalb der Toleranzbereiche hergestellt werden können, abgenutzt ist.

Besonders vorteilhaft ist vorgesehen, dass der Grenzwert, der festlegt, wann eine Werkzeugkorrektur stattfindet, festlegbar ist. Beispielsweise kann ein Kunde festlegen, wann eine Werkzeugkorrektur durchgeführt werden soll.

Gemäß einer weiteren vorteilhaften Ausführungsform der Erfindung ist vorgesehen, dass zusätzlich Parameter äußerer Einflüsse bei Berechnung des Werkzeugkorrekturwertes berücksichtigt werden. Solche äußeren Einflüsse können beispielsweise die Außentemperatur sein, die sich auf die Ausdehnung der Werkzeugmaschine und/oder des Werkstückes auswirkt.

Es ist beispielsweise denkbar, dass nach einem Stillstand der Maschine beispielsweise am Wochenende oder zu Wartungszwecken, die Werkzeugmaschine eine niedrige Temperatur aufweist, das heißt, eine unter der Betriebstemperatur liegende Temperatur. Dies kann sich auf die Produktion der Werkstücke auswirken. Erlangt die Werkzeugmaschine im Betrieb wieder ihre Betriebstemperatur, ist es beispielsweise nicht erforderlich, den Parameter "Betriebstemperatur" ständig zu korrigieren. Genauso kann eine Außentemperatur einen Einfluss auf die Herstellung der Werkstücke habe.

Vorteilhaft ist weiterhin vorgesehen, dass bei Überschreitung eines Grenzwertes oder eines Toleranzwertes der Messdaten eines Messmerkmales und/oder eines Parameters eine Nullpunktkorrektur durchgeführt wird.

Grundsätzlich besteht die Möglichkeit, eine Werkzeugmaschinenkorrektur vorzunehmen, indem ein Verfahrweg verändert wird oder beispielsweise ein veränderter Fahrweg eines sich abnutzenden Spindelantriebes ausgeglichen wird. Es besteht jedoch auch die Möglichkeit eine Nullpunktkorrektur durchzuführen.

Die Nullpunktkorrektur basiert auf den Positionsdaten eines Messmerkmales, welches eine Gruppierung von Merkmalen darstellt. Zum Beispiel beinhaltet das Messmerkmal "Bohrung" die Merkmale "Durchmesser" und "Länge". Korrigiert werden kann die Position verschiedener Messmerkmale zueinander oder zu einem Referenzpunkt.

Gemäß einer vorteilhaften Ausführungsform der Erfindung ist vorgesehen, dass die Vermessung des Werkstückes in der Werkzeugmaschine und/oder auf einem externen Messgerät durchgeführt wird. Es besteht die Möglichkeit, das Werkstück nach der Herstellung zu vermessen, wenn es sich noch in der Werkzeugmaschine befindet. Dies ist beispielsweise mit einem Gelenkarmroboter oder dergleichen möglich.

Es besteht jedoch auch die Möglichkeit, das Werkstück auf einem externen Messgerät, beispielsweise einem Koordinatenmessgerät mit taktilen Sensoren, optischen Sensoren, Rauigkeitssensoren oder dergleichen zu vermessen.

Eine weitere vorteilhafte Ausführungsform der Erfindung sieht vor, dass ein Datensatz, insbesondere ein CAD-Datensatz des Werkstückes in der Werkzeugmaschine zur Ermittlung des Werkzeugkorrekturwertes abgespeichert wird. Der Datensatz, insbesondere ein CAD-Datensatz des Werkstückes dient dazu, Sollwerte für das Werkstück der Werkzeugmaschine zur Verfügung zu stellen. In dem Datensatz können auch Toleranzgrenzen vorgesehen sein.

Aufgrund des Datensatzes kann die Werkzeugmaschine das Werkstück herstellen.

Vorteilhaft ist vorgesehen, dass eine Mitteilung durch die Werkzeugmaschine erfolgt, wenn die Messdaten der Messmerkmale und/oder Parameter innerhalb der Grenzwerte oder Toleranzwerte liegen. Die Werkzeugmaschine gibt nicht nur Rückmeldung, wenn eine Werkzeugkorrektur erfolgt. Vorteilhaft gibt die Werkzeugmaschine auch eine Rückmeldung, wenn die Messdaten der Messmerkmale und/oder Parameter nicht zu korrigieren sind. Hierdurch ist eine Kontrolle möglich, dass die Überwachung der Messdaten durchgeführt wird.

Eine weitere vorteilhafte Ausführungsform der Erfindung sieht vor, dass ein Werkzeugkorrekturwert berechnet wird unter Berücksichtigung von Messdaten und/oder Parametern und unter Berücksichtigung zurückliegender Messungen. Die Parameter können Parameter der Messmerkmale wie beispielsweise Temperatur des Werkstückes am Messmerkmal, und/oder Prozessparameter wie beispielsweise Spindelanpressdruck und/oder Parameter äußerer Einflüsse wie beispielsweise Außentemperatur sein.

Diese Ausführungsform weist den Vorteil auf, dass die Prozessparameter korrekturspezifisch berücksichtigt werden können. Beispielsweise ist nach einem Stillstand der Maschine (nach einem Wochenende oder einer Wartung) häufiger eine Temperaturkorrektur notwendig als im laufenden Betrieb. Diese korrekturspezifische Berücksichtigung von Prozessparametern ist vorteilhaft angepasst an zurückliegende Messungen, das heißt, dass erkannt wird, dass nach jedem Wochenende häufiger eine Temperaturkorrektur bei Aufnahme des Betriebes erforderlich ist.

Eine weitere vorteilhafte Ausführungsform der Erfindung sieht vor, dass Werkzeugkorrekturwerte für ein erstes Werkstück auf andere Werkstücke übertragen werden. Grundsätzlich ist es möglich, dass beispielsweise bei Vorsehen von Bohrungen in einem ersten Werkstück Werkzeugkorrekturwerte erfasst werden, weil beispielsweise Bohrer oder Fräser sich abnutzen. Diese Werkzeugkorrekturwerte können für die Bearbeitung anderer Werkstücke, in denen auch Bohrungen hergestellt werden, übertragen werden, so dass mit der Werkzeugkorrektur die Bohrungen in den anderen Werkstücken mittelbar in den Toleranzgrenzen oder Grenzwerten herstellbar sind.

Vorteilhaft ist vorgesehen, dass die Messdaten von der Werkzeugmaschine und/oder von Inlinemesssystemen und/oder von Messgeräten, insbesondere Koordinatenmessgeräten, Gelenkarm- oder Handmessmitteln erfasst werden. Die Messdaten können von sämtlichen verwendeten Geräten des Aufbaus erfasst werden, das heißt von der Werkzeugmaschine selbst oder von Inlinemesssystemen, das heißt Messsystemen, die sich in der Werkzeugmaschine befinden, wie zum Beispiel Maßstabsüberwachungen für Linearantriebe in X-, Y- oder Z-Richtung.

Gemäß einer weiteren vorteilhaften Ausführungsform ist vorgesehen, dass eine Visualisierung und/oder Auswertung von einzelnen Messmerkmalen und/oder Parametern und/oder von Werkzeugkorrekturdaten und/oder einem Werkzeugverhalten erfolgt. Hierdurch ist es möglich, dass ein Operateur, der jedoch nicht hochspezialisiert sein muss, die verschiedenen Werte überwachen kann und bei einer groben Abweichung geeignete Maßnahmen ergreift.

Vorteilhaft ist vorgesehen, dass eine Gruppierung der Messmerkmale nach Werkzeugen und/oder Werkstücknullpunkten durchgeführt wird.

Für jedes Bearbeitungsprogramm können mehrere Nullpunkte definiert werden. Die Abweichung der Position eines oder mehrerer Messmerkmale muss den zugeordneten Nullpunkt achsweise korrigieren. Die Korrektur der Nullpunkte kann darüber hinaus über die Wichtung der einzelnen Messmerkmale berechnet werden.

Grundsätzlich ist davon auszugehen, dass Messdaten von Messmerkmalen sich ändern, wenn die zugeordneten Werkzeuge zum Beispiel verschleißen. Hierbei ist es sinnvoll, eine Gruppierung der Messmerkmale nach Werkzeugen vorzunehmen, so dass verschiedene Messmerkmale, die mit ein und demselben Werkzeug bearbeitet werden, korrigiert werden.

Weiterhin ist vorteilhaft vorgesehen, dass die Werkzeuge in Grafiken dargestellt werden.

Hierdurch ist zum einen für einen Operateur ersichtlich, welche Werkzeuge zur Verfügung stehen. Beispielsweise kann auch der Verschleiß von Werkzeugen grafisch dargestellt werden, wenn für die mit einem bestimmten Werkzeug hergestellten Messmerkmale eine Werkzeugkorrektur erforderlich ist.

Gemäß einer weiteren vorteilhaften Ausführungsform der Erfindung ist vorgesehen, dass bei Anlegen eines Projektes eine Werkzeugmaschine ausgewählt wird, dass sämtliche verfügbaren Werkzeuge der Werkzeugmaschine angezeigt werden, dass eine Quelle für Qualitätsdaten des Werkstückes ausgewählt wird und dass die Qualitätsdaten in der Werkzeugmaschine eingelesen werden.

Bei dem Anlegen eines Projektes, bei dem eine Korrektur von Werkzeugparametern erfolgt, kann eine Werkzeugmaschine ausgewählt werden und es werden sämtliche verfügbaren Werkzeuge dieser Werkzeugmaschine angezeigt, so dass ein Operateur die Werkzeuge beispielsweise auswählen kann. Darüber hinaus wird entweder automatisch oder durch einen Operateur eine Quelle für Qualitätsdaten des Werkstückes ausgewählt, das heißt, es werden die grundsätzlichen Daten des herzustellenden Werkstückes ausgewählt, inklusive der Grenzwerte oder Toleranzwerte. Diese Qualitätsdaten werden in der Werkzeugmaschine eingelesen, um das Werkstück herzustellen.

Eine weitere vorteilhafte Ausführungsform der Erfindung sieht vor, dass sämtliche verfügbaren und aktiven Werkzeugmaschinen und/oder der Status jeder Werkzeugmaschine und/oder des auf der wenigstens einen Werkzeugmaschine laufenden Projektes und/oder letzte Ereignisse und/oder Werkzeugkorrekturwerte auf einer Anzeige der Werkzeugmaschine und/oder eines mit der Werkzeugmaschine in Verbindung stehenden Computers angezeigt werden. Dieses Verfahren weist den Vorteil auf, dass feststellbar ist, auf welcher Werkzeugmaschine welches Werkstück hergestellt wird und wie lange der Produktionsprozess noch dauert, damit weitere oder andere Werkstücke zu einem späteren Zeitpunkt auf einer derzeit aktiven Werkzeugmaschine hergestellt werden können. Auch die Informationen der einzelnen auf den Werkzeugmaschinen laufenden Projekte oder der letzten Ereignisse und/oder Werkzeugkorrekturwerte werden angezeigt, um die Werkzeugmaschine zu überwachen.

Zu den Messeinrichtungen, mit denen die Werkstücke vermessen werden, gehören beispielsweise Koordinatenmessgeräte, Gelenkarmmessgeräte, Laserscanner, Strukturlichtmesseinrichtungen, Schichtdickenmesseinrichtungen, Wägeeinrichtungen, Härtemesseinrichtungen, Temperaturmesseinrichtungen oder Geräte zum Messen von Spannungen, elektrischem Strom, elektrischem Widerstand und/oder Spannungsfestigkeit.

Die Werkzeugmaschine kann gemäß der Erfindung zum Beispiel eine additive Fertigungsmaschine, eine CNC-Maschine, eine Pressmaschine, eine Walzmaschine, eine Draht- und/oder Blechbiegemaschine, eine Drahtziehmaschine, eine Schleif- und/oder Poliermaschine oder eine Schweißmaschine sein.

Die Werkzeuge können beispielsweise eine 3D-Druck-, Bohr-, Dreh-, Fräs-, Schneid-, Schleif-, Polier-, Press-, Walz-, Biege- und/oder Schweißfunktion bereitstellen.

Weitere Merkmale und Vorteile der Erfindung ergeben sich anhand der zugehörigen Zeichnungen, in denen verschiedene Ausführungsformen einer erfindungsgemäßen Produktionsanlage nur beispielhaft dargestellt sind, ohne die Erfindung auf diese Ausführungsbeispiele zu beschränken. In den Zeichnungen zeigen:
- Fig. 1: eine schematische Darstellung eines Produktionsprozesses;
- Fig. 2: eine Übersicht über das erfindungsgemäße Verfahren mit einer Regelkarte;
- Fig. 3: Messdaten eines Zapfens;
- Fig. 4: Messdaten einer Tasche;
- Fig. 5: eine Korrektur der Messdaten gemittelt aus den Werten der Fig. 3 und der Fig. 4;
- Fig. 6: eine vergrößerte Darstellung der Korrektur der Fig. 5.

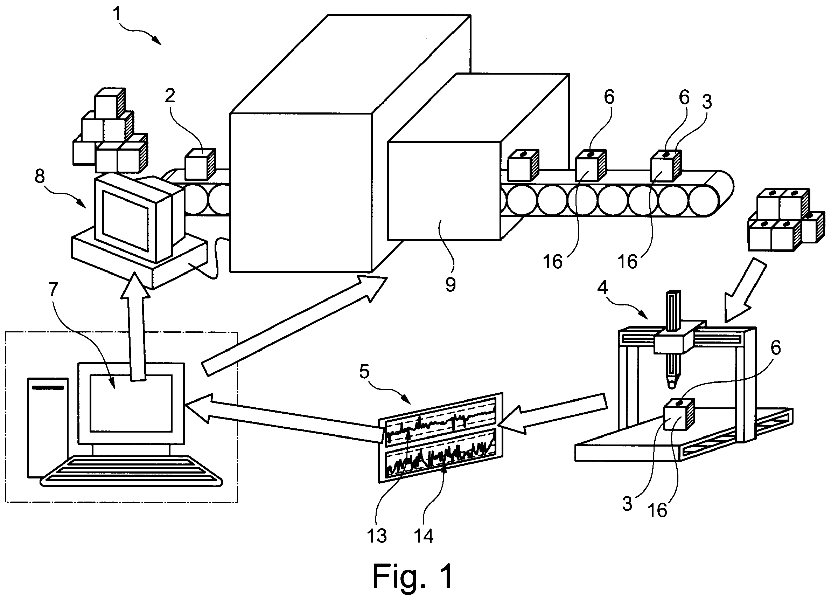

Fig. 1 zeigt eine Produktionsanlage 1, in der aus Rohlingen 2 Werkstücke 3 hergestellt werden, beispielsweise durch Bearbeitung mit einem Bohrer oder einem Fräswerkzeug oder dergleichen. Mit einer Messeinrichtung, im vorliegenden Fall einem Koordinatenmessgerät 4, werden Eigenschaften der Werkstücke 3 gemessen. Diese Messdaten ergeben eine Regelkarte 5, in der die Messdaten erfasst werden, nämlich die Messdaten 13 und die Messdaten 14 von unterschiedlichen Messmerkmalen des Werkstückes 3. Das Werkstück 3 weist im vorliegenden Fall zwei Messmerkmale auf, nämlich eine Bohrung 6 und eine zweite Bohrung 16. Die Messdaten der Regelkarte werden einer Auswerteeinheit 7, beispielsweise einem Computer übermittelt. Der Computer wertet die Regelkarte 5 aus. Sind die Werte stabil und laufen nicht gegen einen Grenzwert oder einen Toleranzwert, erfolgt kein Eingriff in den Herstellungsprozess. Sind die Messdaten nicht stabil, erfolgt ein Eingriff, indem ein Korrekturwert, der aus den Messdaten ermittelt wird, an eine Prozesssteuereinrichtung 8 weitergegeben wird oder unmittelbar an die Werkzeugmaschine 9 der Produktionsanlage 1. In der Werkzeugmaschine 9 wird der Werkzeugkorrekturwert verwendet, um Werkstücke 3 mit einer Bohrung 6 oder einer Bohrung 16 herzustellen, die im Toleranzbereich oder innerhalb vorgegebener Grenzwerte liegt.

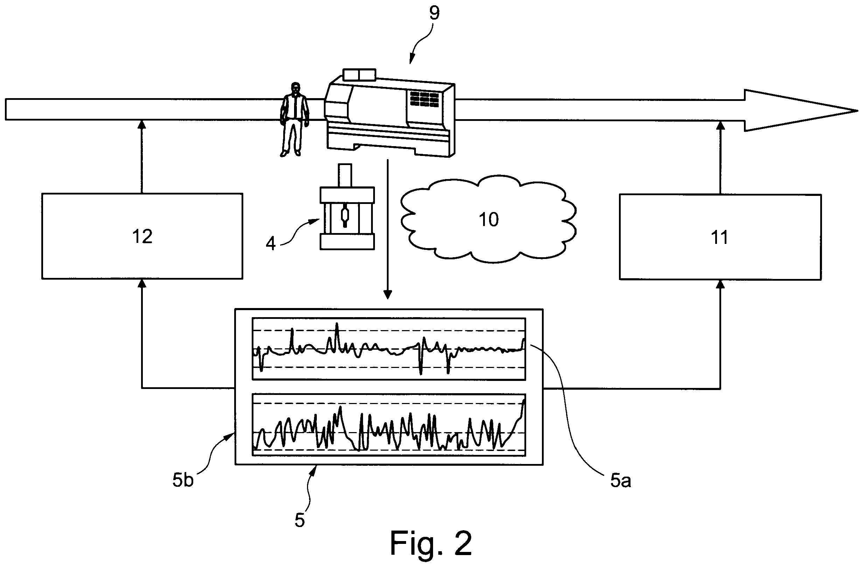

Gemäß Fig. 2 ist die Messmaschine 9 dargestellt sowie das Koordinatenmessgerät 4. Die Prozessinformation 10 wird, wie schon erläutert, in der Regelkarte 5 abgelegt. Ist die Regelkarte stabil, wie in dem Bereich 5a der Regelkarte, erfolgt keine Aktion, das heißt der Prozesszweig 11 läuft weiter. Erfolgt eine größere Abweichungen der Messdaten von den Nennwerten, wie bei 5b durch die nichtstabilen Messdaten dargestellt, wird der Prozesszweig 12, das heißt ein Prozesseingriff notwendig.

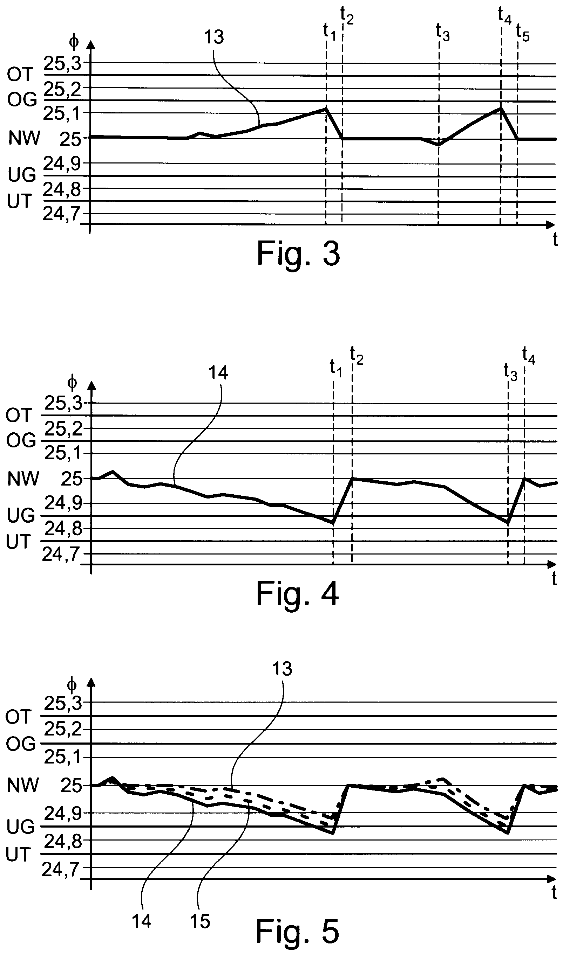

In Fig. 3 ist eine Darstellung der Messdaten 13 der Außenkontur eines Zapfens gezeigt. Es ist der Durchmesser Ø gegen die Zeit t aufgetragen. Der Nominalwert liegt bei 25. Nutzt sich ein Fräswerkzeug zur Herstellung des Zapfens im Laufe der Zeit ab, so erfolgt eine Drift, die im dargestellten Beispiel gegen einen festgesetzten Grenzwert bei 25,15 (OG) zum Zeitpunkt t1 läuft. Zum Zeitpunkt t2 erfolgt eine Korrektur, so dass die Messdaten wieder im Nominalwert liegen. Zum Zeitpunkt t3 macht sich eine weitere Abnutzung des Fräskopfes bemerkbar und die Messdaten weisen wiederum eine Drift auf. Zum Zeitpunkt t4 erfolgt wieder eine maximale Annäherung an den Grenzwert 25,15 (OG), so dass anschließend zum Zeitpunkt t5 wiederum eine Korrektur erfolgt.

Da der Fräskopf sich abnutzt, wird der Durchmesser des Fräskopfes kleiner, so dass der Durchmesser des Zapfens größer wird.

In Fig. 4 sind die Messdaten einer Innenkontur einer Tasche dargestellt. Es ist der Durchmesser Ø gegen die Zeit t aufgetragen. Auch hier ist wiederum der Durchmesser gegen die Zeit aufgetragen. Bei Abnutzung des Fräskopfes wird die Innenkontur immer größer, so dass die Innenkontur mit einer Drift zum Zeitpunkt t1 gegen einen Grenzwert von 24,8 (UG) läuft. Es erfolgt zum Zeitpunkt t2 eine Korrektur. Durch weitere Abnutzung des Fräskopfes wird der Durchmesser der Innenbohrung wieder kleiner, bis zum Zeitpunkt t3, an dem die Messdaten (14) des Durchmessers der Innenkontur den Grenzwert 24,85 (UG) überschreiten. Zum Zeitpunkt t4 erfolgt eine Korrektur.

In Fig. 5 ist wieder der Durchmesser Ø gegen die Zeit t aufgetragen.

Die Messdaten 13 der Fig. 3 sind an dem Nominalwert 25 (NW) gespiegelt und strichpunktiert dargestellt. Die Messdaten 14 der Fig. 4 bezüglich der Tasche sind mit einer durchgezogenen Linie dargestellt. Aus diesen Messdaten 13, 14 wird ein Mittelwert 15 bestimmt, der in Fig. 5 als gestrichelte Linie dargestellt ist. Dieser Mittelwert 15 bildet den Werkzeugkorrekturwert.

Wie schon ausgeführt, ist in den Fig. 3 bis 5 bei 25 der Nominalwert NW eingetragen. Eine obere Grenze OG liegt bei 25,15. Eine untere Grenze UG bei 24,85. Der obere Toleranzwert OT liegt bei 25,25 und der untere Toleranzwert UT liegt bei 24,75.

An Stelle der reinen Mittelwertbildung, wie sie in Fig. 5 vorgenommen wurde, kann auch eine Wichtung der Merkmale vorgenommen werden, so dass beispielsweise der Werkzeugkorrekturwert des Zapfens gemäß Fig. 3 eine größere Wichtung aufweist als der Werkzeugkorrekturwert der Tasche gemäß Fig. 4. In diesem Falle verschiebt sich der Mittelwert 15 in Fig. 5 in Richtung der Messdaten 13.

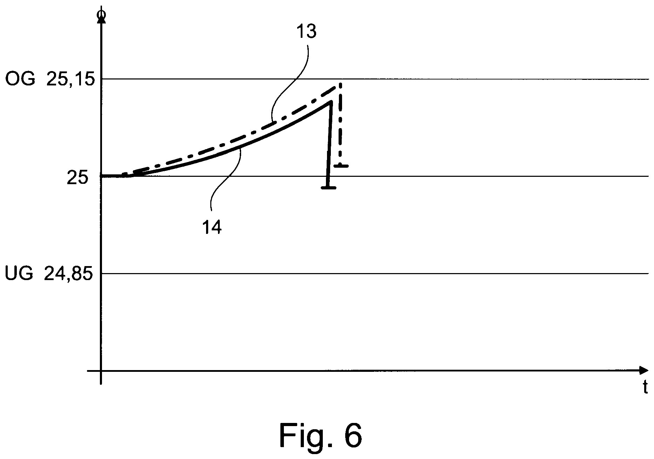

Wie in Fig. 6 dargestellt, hat die Mittelwertbildung einen Einfluss auf die Korrektur. In Fig. 6 ist dargestellt, wie die Messdaten 13 der Fig. 3 gegen den oberen Grenzwert OG = 25,15 laufen, das heißt, es liegt eine kontinuierliche Drift vor. Die Korrektur erfolgt nunmehr nicht wie in Fig. 3 bis auf den Nominalwert NW = 25, sondern aufgrund der Mittelwertbildung auf einen Nominalwert der größer ist als 25, beispielsweise 25,05.

Gleichermaßen werden die Messdaten 14 der Tasche aufgrund der Mittelwertbildung derart korrigiert, dass diese etwas überkorrigiert werden, das heißt nicht auf den Nominalwert NW = 25, sondern auf einen Wert unterhalb 25, das heißt, beispielsweise 24,95.

Die Fig. 3 und 4 zeigen die Messdaten verschiedener Werkstücke, die im Laufe der Zeit t gemessen werden. Das bedeutet, dass nicht ein einmaliger Messdatensatz eines Merkmals erfasst wird, sondern über einen gewissen Zeitraum und/oder über eine bestimmte Anzahl von Werkstücken oder Merkmalen, beispielsweise fünf oder zehn die Drift erfasst wird und anschießend eine Korrektur erfolgt.

In den Fig. 3, 4 und 5 sind obere Toleranzwerte OT, untere Toleranzwerte UT, obere Grenzwerte OG und untere Grenzwerte UG festgelegt. Die Toleranzwerte OT und UT sind von der Herstellvorschrift vorgegeben. Die Grenzwerte OG und UG können festgelegt werden.

### Bezugszahlen

- 1: Produktionsanlage
- 2: Rohlinge
- 3: Werkstück
- 4: Koordinatenmessgerät
- 5: Regelkarte
- 5a: stabile Messdaten
- 5b: nicht stabile Messdaten
- 6: Messmerkmal
- 7: Auswerteinheit
- 8: Prozesssteuereinrichtung
- 9: Werkzeugmaschine
- 10: Prozessinformation
- 11: Prozesszweig
- 12: Prozesszweig
- 13: Messdaten Zapfen
- 14: Messdaten Innentasche
- 15: Mittelwert
- 16: Bohrung
- OT: oberer Toleranzwert
- UT: unterer Toleranzwert
- OG: oberer Grenzwert
- UG: unterer Grenzwert
- NW: Nominalwert

## Patentansprüche

1. Verfahren zur Korrektur von Werkzeugparametern einer Werkzeugmaschine (9) zur Bearbeitung von Werkstücken (3),
- bei dem Messdaten (13, 14) von Messmerkmalen als Ist-Werte wenigstens eines mit der Werkzeugmaschine (9) bearbeiteten Werkstückes (3) erfasst werden,
- bei dem die Messdaten (13, 14) mit vorgegebenen Soll-Werten des Werkstückes verglichen werden,
**dadurch gekennzeichnet,**
- **dass** Messdaten (13, 14) von wenigstens zwei Messmerkmalen (6, 16) und/oder
- **dass** Messdaten (13, 14) von wenigstens zwei Parametern wenigstens eines Messmerkmales (6, 16) und/oder
- **dass** Messdaten (13, 14) wenigstens eines Messmerkmales (6, 16) und von wenigstens eines Parameters desselben oder eines anderen Messmerkmales erfasst werden,
- **dass** aus diesen Messdaten (13, 14) und den zugehörigen Soll-Werten ein Mittelwert (15) für einen Werkzeugkorrekturwert berechnet wird,
- **dass** mit dem Werkzeugkorrekturwert eine Korrektur der Werkzeugmaschine (9) durchgeführt wird.

2. Verfahren nach Anspruch 1, **dadurch gekennzeichnet, dass** aus den Messdaten (13, 14) von wenigstens zwei Messmerkmalen (6, 16) und/oder aus den Messdaten (13, 14) von wenigstens zwei Parametern wenigstens eines Messmerkmales (6) desselben oder eines anderen Messmerkmales (16) und/oder aus den Messdaten (13, 14) von wenigstens einem Messmerkmal (6, 16) und wenigstens einem Parameter ein gewichteter Mittelwert (15) für den Werkzeugkorrekturwert berechnet wird.

3. Verfahren nach Anspruch 1 oder 2, **dadurch gekennzeichnet, dass** das Messmerkmal (6, 16) und/oder der Parameter mit der kleinsten Toleranz am stärksten in die Wichtung eingeht.

4. Verfahren nach einem der vorhergehenden Ansprüche, **dadurch gekennzeichnet, dass** eine Zuordnung jedes Messmerkmales (6, 16) zu wenigstens einem Bearbeitungswerkzeug erfolgt.

5. Verfahren nach einem der vorhergehenden Ansprüche, **dadurch gekennzeichnet, dass** der Werkzeugkorrekturwert gleitend aus den letzten n Messungen (mit n>1) berechnet wird.

6. Verfahren nach einem der vorhergehenden Ansprüche, **dadurch gekennzeichnet, dass** der Werkzeugkorrekturwert visualisiert wird.

7. Verfahren nach einem der vorhergehenden Ansprüche, **dadurch gekennzeichnet, dass** die Korrektur der Werkzeugmaschine (9) nach Ermittlung eines Werkzeugkorrekturwertes vollautomatisch oder nach einer Bestätigung oder nach einer Bestätigung nach Visualisierung des Werkzeugkorrekturwertes durchgeführt wird.

8. Verfahren nach einem der vorhergehenden Ansprüche, **dadurch gekennzeichnet, dass** eine Werkzeugkorrektur durchgeführt wird, nachdem aufgrund der letzten n Messungen eine kontinuierliche Drift von Messdaten (13, 14) eines Messmerkmales (6, 16) und/oder eines Parameters erfasst wurde und die Messdaten (13, 14) einen vorgegebenen Grenzwert (OG, UG) oder einen vorgegebenen Toleranzwert (OT, UT) überschreitet.

9. Verfahren nach Anspruch 8, **dadurch gekennzeichnet, dass** der Grenzwert (OG, UG) festlegbar ist.

10. Verfahren nach einem der vorhergehenden Ansprüche, **dadurch gekennzeichnet, dass** zusätzlich Parameter äußerer Einflüsse bei Berechnung des Werkzeugkorrekturwertes berücksichtigt werden.

11. Verfahren nach einem der vorhergehenden Ansprüche, **dadurch gekennzeichnet, dass** bei Überschreitung eines Grenzwertes (OG, UG) oder eines Toleranzwertes (OT, UT) der Messdaten (13, 14) eines Messmerkmales (6, 16) und/oder eines Parameters eine Nullpunktkorrektur durchgeführt wird.

12. Verfahren nach einem der vorhergehenden Ansprüche, **dadurch gekennzeichnet, dass** die Vermessung des Werkstückes (3) in der Werkzeugmaschine (9) und/oder auf einem externen Messgerät (4) durchgeführt wird.

13. Verfahren nach einem der vorhergehenden Ansprüche, **dadurch gekennzeichnet, dass** ein Datensatz, insbesondere ein CAD-Datensatz des Werkstückes (3) in der Werkzeugmaschine (9) zur Ermittlung des Werkzeugkorrekturwertes abgespeichert wird.

14. Verfahren nach einem der vorhergehenden Ansprüche, **dadurch gekennzeichnet, dass** eine Mitteilung durch die Werkzeugmaschine (9) erfolgt, wenn die Messdaten (13, 14) der Messmerkmale (6, 16) und/oder Parameter innerhalb der Grenzwerte (OG, UG) oder Toleranzwerte (OT, UT) liegen.

15. Verfahren nach einem der vorhergehenden Ansprüche, **dadurch gekennzeichnet, dass** ein Werkzeugkorrekturwert berechnet wird unter Berücksichtigung von Messdaten (13, 14) und/oder Parametern und unter Berücksichtigung zurückliegender Messungen.

16. Verfahren nach einem der vorhergehenden Ansprüche, **dadurch gekennzeichnet, dass** eine Vorhersage von Werkzeugkorrekturwerten durchgeführt wird unter Berücksichtigung zurückliegender Messungen.

17. Verfahren nach einem der vorhergehenden Ansprüche, **dadurch gekennzeichnet, dass** Werkzeugkorrekturwerte für ein erstes Werkstück (3) auf andere Werkstücke übertragen werden.

18. Verfahren nach einem der vorhergehenden Ansprüche, **dadurch gekennzeichnet, dass** die Messdaten (13, 14) von der Werkzeugmaschine (9) und/oder von In-Line-Messsystemen und/oder von externen Messgeräten, insbesondere Koordinatenmessgeräten (4), Gelenkarm- oder Handmessmitteln erfasst werden.

19. Verfahren nach einem der vorhergehenden Ansprüche, **dadurch gekennzeichnet, dass** eine Visualisierung und Auswertung von einzelnen Messmerkmalen (6, 16) und/oder Parametern und/oder von Werkzeugkorrekturdaten (15) und/oder einem Werkzeugverhalten erfolgt.

20. Verfahren nach einem der vorhergehenden Ansprüche, **dadurch gekennzeichnet, dass** eine Gruppierung der Messmerkmale (6, 16) nach Werkzeugen und/oder Werkstücknullpunkten durchgeführt wird.

21. Verfahren nach einem der vorhergehenden Ansprüche, **dadurch gekennzeichnet, dass** die Werkzeuge in Grafiken dargestellt werden.

22. Verfahren nach einem der vorhergehenden Ansprüche, **dadurch gekennzeichnet, dass** bei Anlegen eines Projektes eine Werkzeugmaschine (9) ausgewählt wird, dass sämtliche verfügbaren Werkzeuge der Werkzeugmaschine (9) angezeigt werden, dass eine Quelle für Qualitätsdaten des Werkstückes (6, 16) ausgewählt wird, und dass die Qualitätsdaten in der Werkzeugmaschine (9) eingelesen werden.

23. Verfahren nach einem der vorhergehenden Ansprüche, **dadurch gekennzeichnet, dass** sämtliche verfügbaren und aktiven Werkzeugmaschinen (9) und/oder der Status jeder Werkzeugmaschine (9) und/oder des auf der wenigstens einen Werkzeugmaschine (9) laufenden Projektes und/oder letzte Ereignisse und/oder Werkzeugkorrekturwerte auf einer Anzeige der Werkzeugmaschine (9) oder eines mit der Werkzeugmaschine in Verbindung stehenden Computers angezeigt werden.

## Geänderte Patentansprüche

### Geänderte Patentansprüche gemäss Regel 137(2) EPÜ.

1. Verfahren zur Korrektur von Werkzeugparametern einer Werkzeugmaschine (9) zur Bearbeitung von Werkstücken (3),
- bei dem Messdaten (13, 14) von Messmerkmalen als IstWerte wenigstens eines mit der Werkzeugmaschine (9) bearbeiteten Werkstückes (3) erfasst werden,
- bei dem die Messdaten (13, 14) mit vorgegebenen Soll-Werten des Werkstückes verglichen werden,
**dadurch gekennzeichnet,**
- **dass** Messdaten (13, 14) von wenigstens zwei Messmerkmalen (6, 16) und/oder
- **dass** Messdaten (13, 14) von wenigstens zwei Parametern wenigstens eines Messmerkmales (6, 16) und/oder
- **dass** Messdaten (13, 14) wenigstens eines Messmerkmales (6, 16) und von wenigstens einem Parameter desselben oder eines anderen Messmerkmales erfasst werden,
- **dass** aus diesen Messdaten (13, 14) und den zugehörigen Soll-Werten ein Mittelwert (15) für einen Werkzeugkorrekturwert berechnet wird,
- **dass** mit dem Werkzeugkorrekturwert eine Korrektur der Werkzeugmaschine (9) durchgeführt wird.

2. Verfahren nach Anspruch 1, **dadurch gekennzeichnet, dass** aus den Messdaten (13, 14) von wenigstens zwei Messmerkmalen (6, 16) und/oder aus den Messdaten (13, 14) von wenigstens zwei Parametern wenigstens eines Messmerkmales (6) desselben oder eines anderen Messmerkmales (16) und/oder aus den Messdaten (13, 14) von wenigstens einem Messmerkmal (6, 16) und wenigstens einem Parameter ein gewichteter Mittelwert (15) für den Werkzeugkorrekturwert berechnet wird.

3. Verfahren nach Anspruch 1 oder 2, **dadurch gekennzeichnet, dass** ein Messmerkmal (6, 16) und/oder ein Parameter mit der kleinsten Toleranz am stärksten in die Wichtung eingeht.

4. Verfahren nach einem der vorhergehenden Ansprüche, **dadurch gekennzeichnet, dass** eine Zuordnung jedes Messmerkmales (6, 16) zu wenigstens einem Bearbeitungswerkzeug erfolgt.

5. Verfahren nach einem der vorhergehenden Ansprüche, **dadurch gekennzeichnet, dass** der Werkzeugkorrekturwert gleitend aus den letzten n Messungen (mit n>1) berechnet wird.

6. Verfahren nach einem der vorhergehenden Ansprüche, **dadurch gekennzeichnet, dass** der Werkzeugkorrekturwert visualisiert wird.

7. Verfahren nach einem der vorhergehenden Ansprüche, **dadurch gekennzeichnet, dass** die Korrektur der Werkzeugmaschine (9) nach Ermittlung eines Werkzeugkorrekturwertes vollautomatisch oder nach einer Bestätigung oder nach einer Bestätigung nach Visualisierung des Werkzeugkorrekturwertes durchgeführt wird.

8. Verfahren nach einem der vorhergehenden Ansprüche, **dadurch gekennzeichnet, dass** eine Werkzeugkorrektur durchgeführt wird, nachdem aufgrund der letzten n Messungen eine kontinuierliche Drift von Messdaten (13, 14) eines Messmerkmales (6, 16) und/oder eines Parameters erfasst wurde und die Messdaten (13, 14) einen vorgegebenen Grenzwert (OG, UG) oder einen vorgegebenen Toleranzwert (OT, UT) überschreitet.

9. Verfahren nach Anspruch 8, **dadurch gekennzeichnet, dass** der Grenzwert (OG, UG) festlegbar ist.

10. Verfahren nach einem der vorhergehenden Ansprüche, **dadurch gekennzeichnet, dass** zusätzlich Parameter äußerer Einflüsse bei Berechnung des Werkzeugkorrekturwertes berücksichtigt werden.

11. Verfahren nach einem der vorhergehenden Ansprüche, **dadurch gekennzeichnet, dass** bei Überschreitung eines Grenzwertes (OG, UG) oder eines Toleranzwertes (OT, UT) der Messdaten (13, 14) eines Messmerkmales (6, 16) und/oder eines Parameters eine Nullpunktkorrektur durchgeführt wird, wobei die Position verschiedener Messmerkmale zueinander oder zu einem Referenzpunkt korrigiert werden.

12. Verfahren nach einem der vorhergehenden Ansprüche, **dadurch gekennzeichnet, dass** die Vermessung des Werkstückes (3) in der Werkzeugmaschine (9) und/oder auf einem externen Messgerät (4) durchgeführt wird.

13. Verfahren nach einem der vorhergehenden Ansprüche, **dadurch gekennzeichnet, dass** ein Datensatz, insbesondere ein CAD-Datensatz des Werkstückes (3) in der Werkzeugmaschine (9) zur Ermittlung des Werkzeugkorrekturwertes abgespeichert wird.

14. Verfahren nach einem der vorhergehenden Ansprüche, **dadurch gekennzeichnet, dass** eine Mitteilung durch die Werkzeugmaschine (9) erfolgt, wenn die Messdaten (13, 14) von Messmerkmalen (6, 16) und/oder Parameter innerhalb der Grenzwerte (OG, UG) oder Toleranzwerte (OT, UT) liegen.

15. Verfahren nach einem der vorhergehenden Ansprüche, **dadurch gekennzeichnet, dass** ein Werkzeugkorrekturwert berechnet wird unter Berücksichtigung von Messdaten (13, 14) und/oder Parametern und unter Berücksichtigung zurückliegender Messungen.

16. Verfahren nach einem der vorhergehenden Ansprüche, **dadurch gekennzeichnet, dass** Werkzeugkorrekturwerte für ein erstes Werkstück (3) auf andere Werkstücke übertragen werden.

17. Verfahren nach einem der vorhergehenden Ansprüche, **dadurch gekennzeichnet, dass** die Messdaten (13, 14) von der Werkzeugmaschine (9) und/oder von In-Line-Mess-systemen und/oder von externen Messgeräten, insbesondere Koordinatenmessgeräten (4), Gelenkarm- oder Handmessmitteln erfasst werden.

18. Verfahren nach einem der vorhergehenden Ansprüche, **dadurch gekennzeichnet, dass** eine Visualisierung und Auswertung von einzelnen Messmerkmalen (6, 16) und/oder Parametern und/oder von Werkzeugkorrekturdaten (15) und/oder einem Werkzeugverhalten erfolgt.

19. Verfahren nach einem der vorhergehenden Ansprüche, **dadurch gekennzeichnet, dass** eine Gruppierung der Messmerkmale (6, 16) nach Werkzeugen und/oder Werkstücknullpunkten durchgeführt wird.

20. Verfahren nach einem der vorhergehenden Ansprüche, **dadurch gekennzeichnet, dass** die Werkzeuge in Grafiken dargestellt werden.

21. Verfahren nach einem der vorhergehenden Ansprüche, **dadurch gekennzeichnet, dass** bei Anlegen eines Projektes eine Werkzeugmaschine (9) ausgewählt wird, dass sämtliche verfügbaren Werkzeuge der Werkzeugmaschine (9) angezeigt werden, dass eine Quelle für Qualitätsdaten des Werkstückes (6, 16) ausgewählt wird, und dass die Qualitätsdaten in der Werkzeugmaschine (9) eingelesen werden.

22. Verfahren nach einem der vorhergehenden Ansprüche, **dadurch gekennzeichnet, dass** sämtliche verfügbaren und aktiven Werkzeugmaschinen (9) und/oder der Status jeder Werkzeugmaschine (9) und/oder des auf der wenigstens einen Werkzeugmaschine (9) kaufenden Projektes und/oder letzte Ereignisse und/oder Werkzeugkorrekturwerte auf einer Anzeige der Werkzeugmaschine (9) oder eines mit der Werkzeugmaschine in Verbindung stehenden Computers angezeigt werden.
